# EUROPEAN PATENT APPLICATION

(11) **EP 3 991 873 A1**
(43) Date of publication of application: **04.05.2022**
(21) Application number: 20831089.6
(22) Date of filing: 22.06.2020
(51) Int. Cl.: B21F 11/00, B21F 37/02, F16K 15/02, B23P 19/02

(54) **FLOW PATH STRUCTURE, CHECK VALVE COMPRISING SAME, AND METHOD FOR PRODUCING CHECK VALVE**

(30) Priority: 28.06.2019 JP 2019122046; 28.06.2019 JP 2019122055
(71) Applicant: Fujikoki Corporation, Tokyo 158-0082 (JP)
(72) Inventor: YAMABE, Shimpei, Tokyo 158-0082 (JP); MOCHIZUKI, Atsushi, Tokyo 158-0082 (JP); FUKUYAMA, Kohei, Tokyo 158-0082 (JP)
(74) Representative: Ter Meer Steinmeister & Partner
(86) International application number: PCT/JP2020/024428
(87) International publication number: WO 2020/262308

(57) **Abstract**

Provided are a flow path structure, a check valve comprising the same, and a method for producing a check valve in which it is possible to ensure smooth flow of a fluid while reducing cost. In a check valve 1 having a flow path structure including a hollow valve main body 2 and a metal retaining ring 6, an annular retaining ring attachment groove 243 into which the retaining ring 6 fits is formed inside the valve main body 2, the retaining ring 6 has a C shape that forms part of a spiral shape, and a fluid flows inside the retaining ring 6 that is fitted into the retaining ring attachment groove 243.

## Description

### [Technical Field]

The present invention relates to a flow path structure, a check valve comprising the same, and a manufacturing method of the check valve.

### [BACKGROUND OF THE INVENTION]

Conventionally, in the refrigeration cycles used in air conditioning equipment such as car air conditioners, check valves are used to control the flow direction of the refrigerant (fluid).

Patent Document 1 discloses a three-way port check valve including a valve main body having a first inlet disposed on a common axis, a second inlet, a cylinder portion connecting them, and an outlet perpendicular to the cylinder portion.

In addition, the three-way port check valve of Patent Document 1 includes a valve element slidable in the cylinder, and a stopper having an orifice provided in the vicinity of the second inlet. Accordingly, when the supply of the fluid from the second inlet side is interrupted and switched to the supply from the first inlet side, the valve element slides in the cylinder portion and hits the stopper due to the inflow pressure, and the tapered portion functions to seal the orifice.

On the other hand, in a state in which the valve element does not seal the orifice, the fluid flowing in from the second inlet passes through the flow path formed between the orifice, the cylinder, and the valve element, and flows to the outlet side.

### [Citation List]

### [Patent Documents]

[Patent Document 1] Japanese Unexamined Patent Application Publication No. H09-133235 A

### [Summary of Invention]

### [Technical Problem]

Incidentally, the stopper of Patent Document 1 is attached to the valve element by a snap ring fitted in a fitting groove formed in the vicinity of the second inlet. Typical snap rings are provided with holes at both end portions of a C-shaped plate material into which tools such as snap ring pliers can be inserted for ease of mounting. Accordingly, both end portions of the snap ring have a shape that protrudes toward the inner diameter side, but when the snap ring is attached to the fitting groove, both end portions often protrude into the flow path.

In the three-way port check valve of Patent Document 1, since the orifice inner diameter of the stopper is smaller than the minimum diameter of the snap ring, there is little risk of suppressing the flow of the fluid flowing in from the second inlet even if a snap ring is used. In contrast to this, flow path structures in which snap rings are provided at positions that interfere with the fluid flowing through the flow path have also been developed. In the case of such a flow path structure, the part of the snap ring protruding into the flow path becomes a resistance to the flow, which may hinder the flow of the fluid or increase the pressure loss. In addition, since snap rings are relatively expensive, there is also a demand for further cost reduction.

The present invention has been made in view of the above problems, and has an object to provide a flow path structure, a check valve comprising the same, and a method for producing a check valve in which it is possible to ensure smooth flow of a fluid while reducing cost.

### [Means for Solving the Problems]

The flow path structure according to the present invention comprises a hollow main body; and a retaining ring formed by processing a linear steel material into a C-shape, wherein: an annular fitting groove into which the retaining ring is fitted is provided inside of the main body, and a fluid flows inside the retaining ring fitted in the fitting groove.

It should be noted that, since the flow path structure according to the present invention cannot be directly specified by its structure or characteristics, or it is substantially impractical to do so, a manufacturing method is described as part of the claims.

### [Advantageous Effects of Invention]

According to the present invention, it is possible to provide a flow path structure, a check valve comprising the same, and a method for producing a check valve in which it is possible to ensure smooth flow of a fluid while reducing cost.

### [Brief Description of Drawings]

[Figure 1] FIG.1 is an axial cross-sectional view of the check valve according to the present embodiment.
[Figure 2] FIG. 2 is an assembly perspective view of a check valve 1 illustrated in a state in which the valve main body is split in half along the axis.
[Figure 3] FIG. 3 is an exploded perspective view of a check valve 1 illustrated in a state in which the valve main body is split in half along the axis.
[Figure 4] FIG. 4 is a side view of the check valve from the direction of the arrow A in FIG 1.
[Figure 5] FIG. 5 is a diagram illustrating a state in which the retaining ring is placed on a flat surface.
[Figure 6] FIG. 6 is a perspective view illustrating an example of a manufacturing device of a retaining ring.
[Figure 7] FIG. 7 is a diagram illustrating an assembly process of the check valve.
[Figure 8] FIG. 8 is a diagram illustrating an assembly process of the check valve.
[Figure 9] FIG. 9 is a diagram illustrating an assembly process of the check valve.
[Figure 10] FIG. 10 is a diagram illustrating an assembly process of the check valve.
[Figure 11] FIG. 11 is a cross sectional view illustrating a cross section passing through the axis of the check valve, in which the retaining ring and the retaining ring attachment groove are cut.
[Figure 12] FIG. 12 is an exploded view similar to FIG. 3 and illustrates a check valve according to a comparative example.
[Figure 13] FIG. 13 is a view similar to FIG. 4, in which the check valve according to the comparative example is viewed from the side.

### [Description of Embodiment(s)]

Hereinafter, embodiments of the present invention will be described with reference to the drawings. It should be noted that, in the following, although an example will be described in which the flow path structure according to the present invention is primarily applied to a check valve for pressure adjustment used in the refrigeration cycle of a car air conditioner or the like, the flow path structure according to the present invention can be applied for various uses other than a check valve. Here, a "C-shape" refers to a shape in which the number of turns of a spiral shape is more than 0.5 and is less than 1, or a shape in which the angle formed by two straight lines connecting the center of the shape and both ends is more than 180 degrees and is less than 360 degrees. It should be noted that when the C-shaped member is placed on a flat surface, in the case that both ends are offset in the height direction, the C-shaped member is considered to be a part of a spiral shape. In addition, as the "linear steel member," for example, hard steel wire, piano wire, stainless steel wire, or the like may be used, but the present invention is not limited thereto.

### (Configuration of the Check Valve)

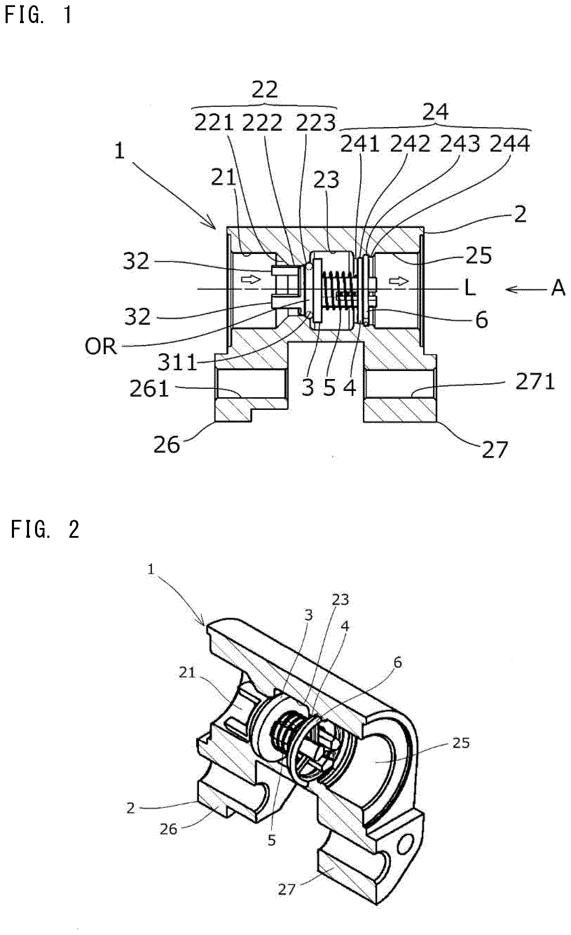

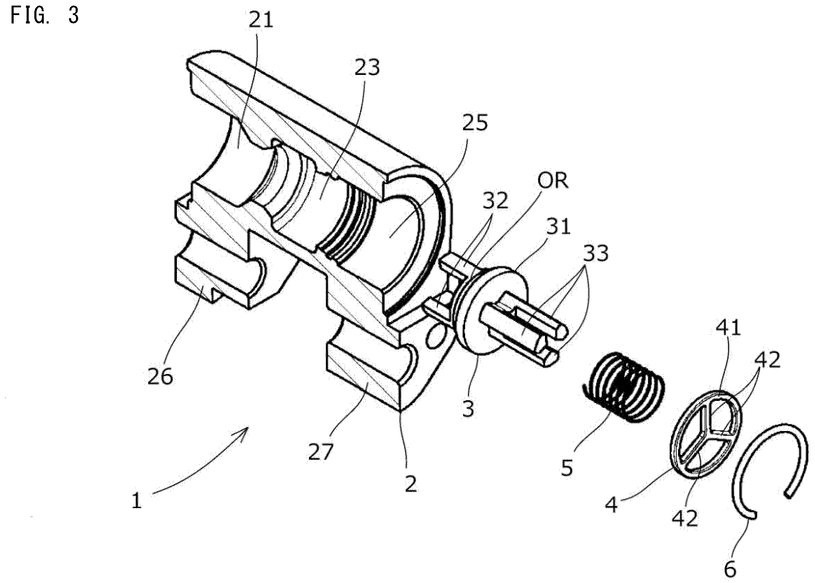

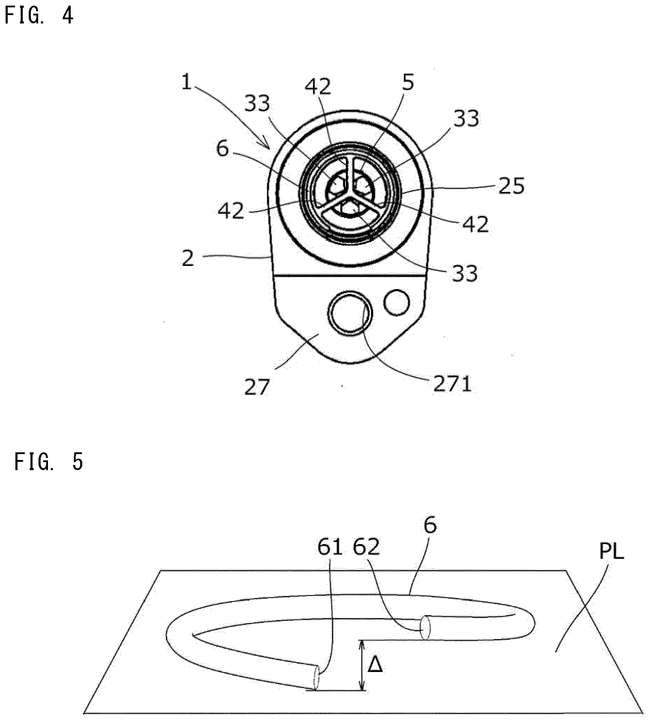

FIG. 1 is an axial cross-sectional view of the check valve 1 according to the present embodiment. FIG. 2 is an assembly perspective view of the check valve 1 illustrated in a state in which the valve main body 2 is split in half along the axis. FIG. 3 is an exploded perspective view of the check valve 1 illustrated in a state in which the valve main body 2 is split in half along the axis. FIG. 4 is a side view of the check valve 1 from the direction of the arrow A in FIG. 1. Here, L is set as the axis of the fluid passage of the check valve 1.

The check valve 1 includes a hollow valve main body (also referred to as a main body) 2 having a refrigerant flow path (also referred to as a fluid passage) through which a refrigerant passes, a valve element 3 arranged in the fluid passage of the valve main body 2, a washer 4 attached to the valve main body 2, a coil spring 5 for biasing the valve element 3 with respect to the washer 4, and a retaining ring 6 for fixing the washer 4 to the valve main body 2. The check valve 1 is connected to a joint to which, for example, a refrigerant pipe connected to an evaporator and a compressor (not illustrated in the figure) is connected, whereby a closed refrigeration cycle is formed. Here, as illustrated by the white arrow in FIG. 1, the left side of the check valve 1 is considered to be the inlet side of the refrigerant, and the right side is considered to be the outlet side of the refrigerant.

The valve main body 2 provided with the flow path structure has a substantially cylindrical first connecting portion 21, a first intermediate passage 22, a central passage 23, a substantially cylindrical second intermediate passage 24, and a substantially cylindrical second connecting portion (a large-diameter cylindrical portion) 25 starting from the inlet side of FIG. 1 along the axis L. Pipes (not illustrated in the figure) can be connected to the first connecting portion 21 and the second connecting portion 25, respectively.

The first intermediate passage 22 connecting the first connecting portion 21 and the central passage 23 is formed by connecting a tapered tubular portion 221, a guide tubular portion 222 having a diameter smaller than that of the first connecting portion 21, and a valve seat 223 with a tapered diameter expanding toward the central passage 23 side.

On the other hand, the second intermediate passage 24 connecting the central passage 23 and the second connecting portion 25 is formed by connecting a first linking tubular portion 241, an annular washer attachment portion 242, an annular retaining ring attachment groove (fitting groove) 243, and a second linking tubular portion 244. The inner diameter of the washer attachment portion 242 is larger than the inner diameter of the first linking tubular portion 242, and the inner diameter of the retaining ring attachment groove 243 is larger than the inner diameter of the washer attachment portion 242. However, the inner diameter of the second linking tubular portion 244 is smaller than the inner diameter of the retaining ring attachment groove 243 and larger than the inner diameter of the washer attachment portion 242. The inner diameter of the second connecting portion 25 is larger than the inner diameter of the retaining ring attachment groove 243 and the inner diameter of the second linking tubular portion 244. It should be noted that the size relationships of the inner diameters of each portion are not limited to the above-mentioned examples. For example, in the case that the inner diameter of the washer attachment portion 242 is smaller than the inner diameter of the retaining ring attachment groove 243, and the inner diameter of the retaining ring attachment groove 243 is larger than the inner diameter of the second linking tubular portion 244, the inner diameter of the second connecting portion 25 may be less than or equal to the inner diameter of the retaining ring attachment groove 243, and the inner diameter of the second connecting portion 25 may be the same as the inner diameter of the washer attachment portion 242.

Further, the valve main body 2 has a first arm portion 26 extending radially outward from the first connecting portion 21, and a second arm portion 27 extending radially outward from the second connecting portion 25. The first arm portion 26 is formed with a screw hole 261 for screwing a bolt (not illustrated in the figure) for fixing a pipe connected to the first connecting portion 21, and the second arm portion 27 is formed with a screw hole 271 for screwing a bolt (not illustrated in the figure) for fixing a pipe connected to the second connecting portion 25.

With reference to FIG. 3, the valve element 3 is formed by connecting a disk portion 31, three leg portions 32 extending from the disk portion 31 along the axis L (FIG. 1) toward the first connecting portion 21 side, and three leg portions 33 extending from the disk portion 31 along the axis L toward the second connecting portion 25 side. The interval between adjacent leg portions 32 is wider than the interval between the adjacent leg portions 33, and the length of the leg portions 32 is shorter than the length of the leg portions 33. The space between the adjacent leg portions 32 becomes the flow path through which the refrigerant passes.

The outer circumferential surface of each leg portion 32 is a part of the same cylindrical surface, and the outer diameter of this same cylindrical surface substantially coincides with the inner diameter of the guide tubular portion 222. Accordingly, when the valve element 3 is installed on the valve main body 2 as illustrated in FIG. 1 and FIG. 2, the valve element 3 is guided in the axis L direction by means of the leg portions 32 sliding in the guide tubular portion 222.

A seal groove 311 is formed between the disk portion 31 and the leg portions 32 as illustrated by the dotted line in FIG. 1. An O-ring OR is arranged in the seal groove 311.

In FIG. 3, the washer 4 has an annular portion 41 and a plurality (here, three) column portions 42 extending from the annular portion 41 toward the center of the washer 4 at equal angles. The inner ends of the column portions 42 are joined to each other. The outer diameter of the washer 4 substantially matches the inner diameter of the washer attachment portion 242.

At the time of assembly illustrated in FIG. 1 and FIG. 2, one end of the coil spring 5 arranged around the leg portion 33 of the valve element 3 comes into contact with the end surface of the disk portion 31, and the other end of the coil spring 5 is supported by the column portion 42 of the washer 4. The coil spring 5 biases the valve element 3 toward the first connecting portion 21 side.

The valve element 3 moves along the axis L in the valve main body 2 in accordance with the refrigerant pressure, and has a function of allowing or blocking the passage of the refrigerant flowing in from the first connecting portion 21 side.

FIG. 5 is a diagram illustrating a state in which the retaining ring 6 is placed on a flat surface PL. The retaining ring 6 is a part of a linear steel material (or plate material) wound in a spiral shape, and has, for example, a uniform circular cross-sectional shape. Accordingly, as illustrated in FIG. 5, when the retaining ring 6 is placed on the flat surface PL, in a state in which one end 61 is placed on the flat surface PL, the other end 62 is in a state suspended from the flat surface PL. Here, one end 61 and the other end 62 are separated by a distance Δ along the height direction from the flat surface PL, and are also separated in the circumferential direction.

### (Manufacturing Method of the Retaining Ring)

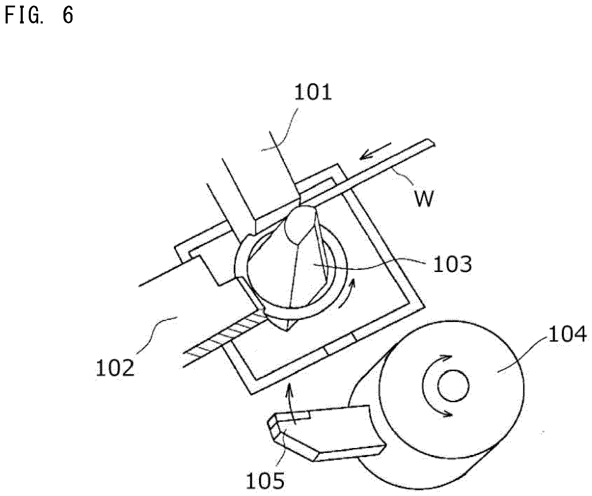

FIG. 6 is a perspective view illustrating an example of a manufacturing device of the retaining ring 6. In front of the metal linear steel material W fed through a feed roller (not illustrated in the figure), a guide 101, a bending die 102 for molding the linear steel material W into a coil shape having a predetermined curvature, a core metal 103 having a substantially semi-conical shape, and a pitch tool (not illustrated in the figure) that presses the linear steel material W that has been molded into a coil shape to form a predetermined pitch are installed so that they can move forward and backward with respect to the center of the coil. In addition, a rotating shaft 104 provided with a cutting blade 105 is rotatably arranged adjacent to the core metal 103.

The linear steel material W fed by the feed roller is formed into a coil shape (a spiral shape) by passing through the guide 101, the core metal 103, the bending die 102 and the pitch tool. Before being completely molded into a coil shape, when molded a predetermined angle amount from the tip of the linear steel material W, by means of the rotating shaft 104 rotating, the cutting blade 105 comes into contact with the linear steel material W from the outer diameter direction, and cuts the linear steel material W in cooperation with the core metal 103. As a result, the retaining ring 6 illustrated in FIG. 5 is formed. While continuously supplying the linear steel material W, each time the cutting blade 105 is intermittently rotationally moved, retaining rings 6 are continuously formed.

It should be noted that the method of manufacturing the retaining ring 6 is not limited to the above-described embodiment. For example, using the manufacturing device of FIG. 6, a retaining ring 6 can also be formed by forming a multi-wind coil with a spiral shape and then cutting the coil at predetermined angles. According to the molding method described above, the retaining ring 6 can be manufactured at low cost.

### (Operation of the Check Valve)

Next, the operation of the check valve 1 will be briefly described. In FIG. 1 and FIG. 2, it is assumed that pipes are connected to the first connecting portion 21 and the second connecting portion 25, respectively. In the case that the refrigerant pressure of the first connecting portion 21 side is lower than the pressure obtained by applying a predetermined pressure (corresponding to the biasing force of the coil spring 5) to the refrigerant pressure of the second connecting portion 25 side, the O-ring OR of the valve element 3 becomes seated on the valve seat 223 of the valve main body 2, which prevents the refrigerant from passing through the check valve 1, and the refrigerant does not flow out from the second connecting portion 25 side.

On the other hand, when the refrigerant pressure of the first connecting portion 21 side becomes higher than the pressure obtained by applying a predetermined pressure to the refrigerant pressure of the second connecting portion 25 side, the valve main body 3 moves in the valve opening direction (to the right in FIG. 1), the O-ring OR separates from the valve seat 223, and the refrigerant is allowed to pass from the first connecting portion 21 side to the second connecting portion 25 side through the inside of the retaining ring 6.

### (Assembly of the Check Valve)

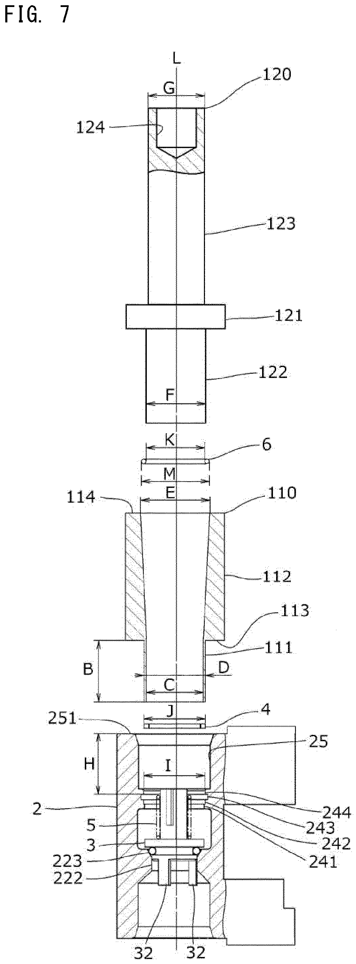

The assembly process of the check valve 1 will be described with reference to FIG. 7 to FIG. 10. As a preliminary step, as illustrated in FIG. 7, a first assembly jig (a hollow cylindrical member) 110 and a second assembly jig 120 are prepared. The first assembly jig 110 has a substantially hollow cylindrical shape. More specifically, the first assembly jig 110 is formed by continuously connecting a thin-walled cylindrical portion 111 and a thick-walled cylindrical portion 112, and a step 113 is formed at the boundary of the cylindrical portion. The length of the thin-walled cylindrical portion 111 is B, the inner diameter thereof is C, and the outer diameter thereof is D. On the other hand, the inner circumference of the thick-walled cylindrical portion 112 has a tapered cylindrical shape in which the diameter gradually increases as the distance from the thin-walled cylindrical portion 111 increases, where the minimum inner diameter thereof is C, and the maximum inner diameter thereof is E.

The second cylindrical assembly jig 120 includes a flange portion 121, a large cylindrical portion (an assembly jig) 122 protruding from one surface of the flange portion 121, and a small cylindrical portion (a small diameter assembly jig) 123 protruding from another surface of the flange portion 121. The outer diameter F of the large cylindrical portion 122 is larger than the outer diameter G of the small cylindrical portion 123. In addition, the length of the large cylindrical portion 122 is shorter than the length of the small cylindrical portion 123. A recessed portion 124 is formed in the center of the end surface of the small cylindrical portion 123.

In addition, the distance from the end surface 251 of the second connecting portion 25 side of the valve main body 2 to the boundary between the second linking tubular portion 244 and the retaining ring attachment groove 243 is H, the inner diameter of the second linking tubular portion 244 is I, and the outer diameter of the washer 4 is J.

Further, the inner diameter of the retaining ring 6 in a free state (a state in which no external force is applied) is K, and the outer diameter thereof is M.

Hereinafter, the assembly process of the check valve 1 will be sequentially described. Here, by arranging the valve main body 2 such that the axis L faces the vertical direction and the second connecting portion 25 is positioned upward in the gravity direction, each part can be assembled using gravity.

As illustrated in FIG. 7, the valve element 3 equipped with the O-ring OR, and the coil spring 5 are inserted into the valve main body 2. Subsequently, the column portions 42 of the washer 4 are inserted between each of the leg portions 33 of the valve element 3, and the washer 4 is arranged at the upper end of the coil spring 5. In this state, the washer 4 is biased upward by the coil spring 5 and does not reach the washer attachment portion 242.

It should be noted that, since the inner diameter I of the second linking tubular portion 244 is larger than the outer diameter J of the washer 4, the washer 4 can pass through the second linking tubular portion 244.

Further, the thin-walled cylindrical portion 111 of the first assembly jig 110 is inserted into the second linking tubular portion 244 through the second connecting portion 25. Since the inner diameter I of the second linking tubular portion 244 is larger than the outer diameter D of the thin-walled cylindrical portion 111 of the first assembly jig 110, the thin-walled cylindrical portion 111 is allowed to be inserted.

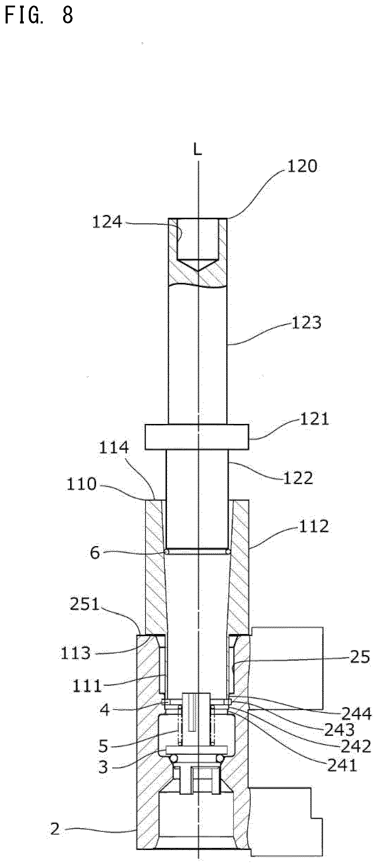

The first assembly jig 110 is inserted into the valve main body 2 until the step 113 of the first assembly jig 110 comes into contact with the end surface 251 of the valve main body 2. Here, since the distance H from the end surface 251 of the second connection portion 25 side to the boundary between the second linking tubular portion 244 and the retaining ring attachment groove 243 and the length B of the thin-walled cylindrical portion 111 are substantially equal to each other, when the step 113 comes into contact with the end surface 251, the tip of the thin-walled cylindrical portion 111 is located at the boundary between the second linking tubular portion 244 and the retaining ring attachment groove 243 (see FIG. 8).

Next, as illustrated in FIG. 8, the retaining ring 6 is inserted from the inner circumferential large-diameter end side of the thick-walled cylindrical portion 112 of the first assembly jig 110, and further, the retaining ring 6 is driven further by using the large cylindrical portion 122 of the second assembly jig 120.

Here, since the maximum inner diameter E of the thick-walled cylindrical portion 112 is larger than the outer diameter M of the retaining ring 6 in a free state, the retaining ring 6 can be inserted into the thick-walled cylindrical portion 112 without applying any external force to the retaining ring 6. In addition, since the outer diameter F of the large cylindrical portion 122 of the second assembly jig 120 is smaller than the maximum inner diameter E of the thick-walled cylindrical portion 112, the large cylindrical portion 122 can be smoothly inserted into the thick-walled cylindrical portion 112.

Further, since the inner diameter K of the retaining ring 6 in a free state is smaller than the outer diameter F of the large cylindrical portion 122, the retaining ring 6 can be pushed in without the large cylindrical portion 122 passing through the retaining ring 6. The diameter of the retaining ring 6 gradually decreases as it is pushed along the tapered inner circumferential surface of the thick-walled cylindrical portion 112.

When the flange portion 121 of the second assembly jig 120 comes into contact with the end surface 114 of the thick-walled cylindrical portion 112, the retaining ring 6 enters to about 1/3 of the length of the thick-walled cylindrical portion 112. At this time, the inner diameter of the retaining ring 6 is reduced while being elastically deformed by being pressed from the tapered inner circumferential surface of the thick-walled cylindrical portion 112, such that it becomes smaller than the outer diameter G of the small cylindrical portion 123 of the second assembly jig 120.

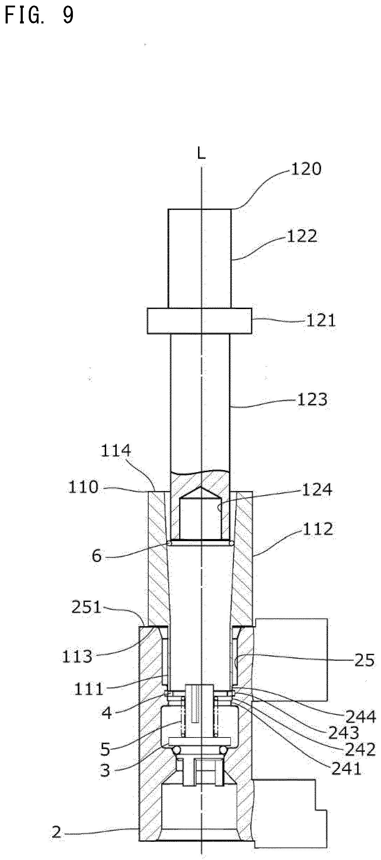

Accordingly, the second assembly jig 120 is pulled out once and inverted, and then, as illustrated in FIG. 9, the small cylindrical portion 123 is inserted into the tapered inner circumferential surface of the thick-walled cylindrical portion 112, pressed against the retaining ring 6, and further driven to pass through the inner circumferential surface of the thin-walled cylindrical portion 111. At this time, the leg portions 33 of the valve element 3 protrude into the second connecting portion 25, but since the recessed portion 124 is formed at the tip of the small cylindrical portions 123, interference between the small cylindrical portion 123 and the leg portions 33 can be avoided.

The reason why the second assembly jig 120 is inverted and the retaining ring 6 is pressed in two steps is because the amount of diameter reduction of the retaining ring 6 when the retaining ring 6 is displaced along the tapered inner circumferential surface is relatively large. That is, the small cylindrical portion 123 cannot be pressed because it slips through the inside of the retaining ring 6 prior to the diameter reduction on the inner circumferential large diameter end side, and the large cylindrical portion 122 comes into contact with the inner circumference of the first assembly jig 110 on the small diameter end side such that the retaining ring 6 cannot be pressed. It should be noted that after pulling out the second assembly jig 120, the retaining ring 6 may be pressed by using another jig without inverting it.

As described above, since the retaining ring 6 is manufactured by a simple process of cutting a linear steel material (or plate material), the cut surfaces of one end 61 and the other end 62 are rough, and there is a high likelihood that burrs and the like may remain. Accordingly, if the retaining ring 6 were assembled to the valve main body 2 as it is, the inner circumferential surface of the valve main body 2 may be damaged by the cut end of the retaining ring 6.

In contrast, according to the present embodiment, by inserting the thin-walled cylindrical portion 111 of the first assembly jig 110 into the valve main body 2, the thin-walled cylindrical portion 111 protects the second connecting portion 25 or the like, and it is possible to prevent the inner circumferential surface of the valve main body 2 from being damaged by the cut end of the retaining ring 6.

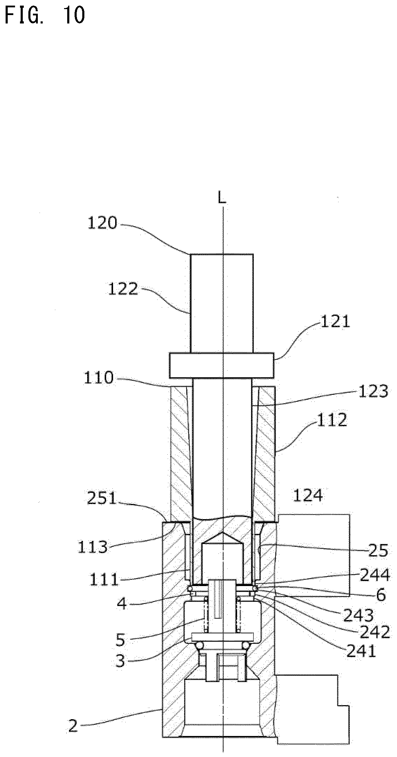

As illustrated in FIG. 10, the retaining ring 6 that has passed through the thin-walled cylindrical portion 111 by means of the small cylindrical portion 123 of the second assembly jig 120 is pushed out from the end portion thereof (the inner circumferential small diameter end) to the outside of the first assembly jig 110. At this time, the retaining ring 6 is released from its compressed state, recovers from the elastic deformation, expands in diameter, and fits into the retaining ring attachment groove 243 adjacent to the thin-walled cylindrical portion 111.

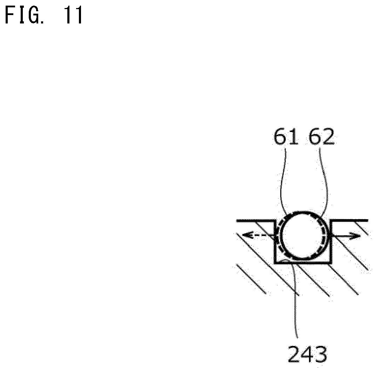

At this time, since the retaining ring 6 is part of the spiral shape, as illustrated in FIG. 11, when fitted in the retaining ring attachment groove 243, both ends 61 and 62, which are separated by a distance Δ (FIG. 6) in a free state, press the walls on both sides of the retaining ring attachment groove 243 in the axial direction by elastic deformation, thereby exerting a retaining effect.

Further, the retaining ring 6 pushed out by the second assembly jig 120 comes into contact with the washer 4 located below and pushes the washer 4 to the washer attachment portion 242. Since the washer 4 is biased toward the retaining ring 6 by the biasing force of the coil spring 5, the washer 4 is maintained in a state of being fixed to the valve main body 2. Subsequently, by pulling out the second assembly jig 120 and the first assembly jig 110 from the valve main body 2, the assembly of the check valve 1 is completed.

### (Comparative Example)

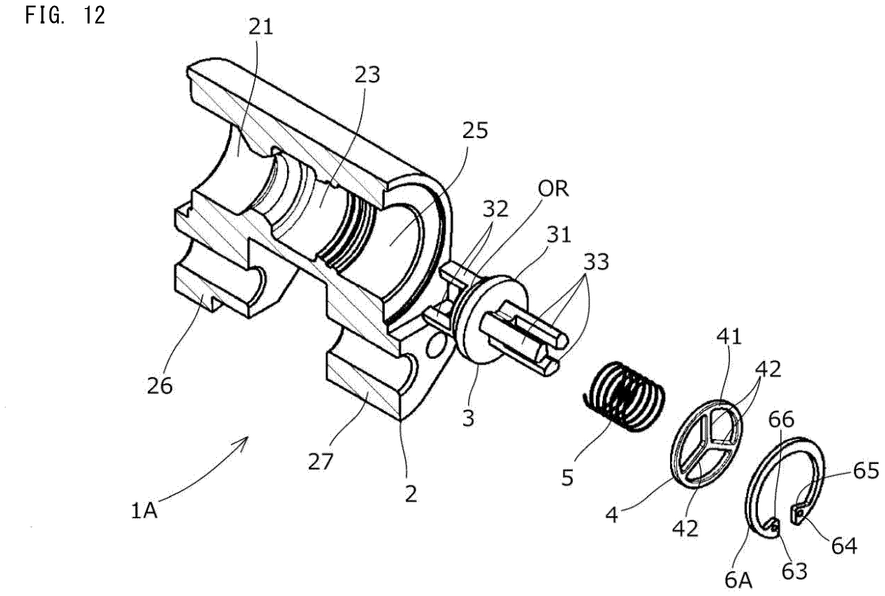

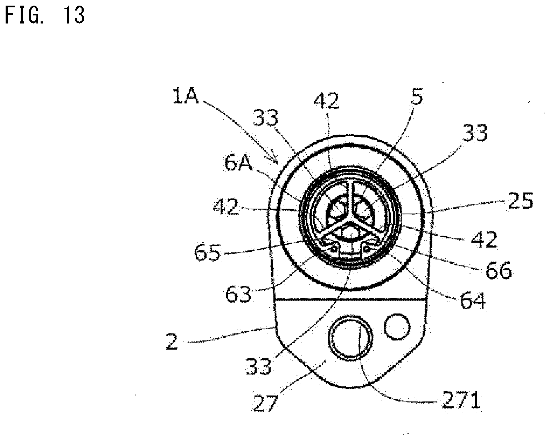

FIG. 12 is an exploded view similar to FIG. 3 and illustrates a check valve 1A according to a comparative example. FIG. 13 is a view similar to FIG. 4, in which the check valve 1A according to the comparative example is viewed from the side. The check valve 1A according to the comparative embodiment differs from the present embodiment in that a snap ring 6A is used instead of a retaining ring, as illustrated in FIG. 12.

The snap ring 6A that is formed in a C shape from a plate material has end portions 65 and 66 projecting inward in the radial direction in a triangular shape in order to form holes 63 and 64 for inserting tools. When the snap ring 6A is mounted in the retaining ring attachment groove 243, it does not apply a pressing force (see FIG. 11) to both axial walls. Since the configuration other than the snap ring 6A is the same as the configuration of the present embodiment described above, the same reference numerals are given and a redundant description will be omitted.

As is clear from the direction illustrated in FIG. 13, in the state where the check valve 1A of the comparative example is assembled, the triangular end portions 65 and 66 are in a state of greatly protruding into the flow path of the refrigerant, which hinders the flow of the refrigerant and can cause turbulence.

Further, in a typical snap ring 6A, since it is formed by processing a plate material by press molding or the like, the cost is relatively high. In addition, in the cross section of the snap ring 6A, the corners are sharp edges, which further hinders the flow of the refrigerant passing through the inside of the snap ring 6A.

In contrast to this, according to the present embodiment, as illustrated in FIG. 4, since both end portions 61 and 62 of the retaining ring 6 are separated in the circumferential direction in a cut state, a large flow path cross-sectional area can be secured as compared with the comparative example. Further, as illustrated in FIG. 11, even in a state where a part of the retaining ring 6 protrudes radially inward from the retaining ring attachment groove 243, the cross section of the retaining ring 6 is circular, such that the flow of the refrigerant passing through the inside of the retaining ring 6 is not easily obstructed.

It should be noted that the present invention is not limited to the above-described embodiments. Within the scope of the present invention, any component of the above-described embodiments can be modified. In addition, any component can be added or omitted in the above-described embodiments.

### [Reference Signs List]

1 Check valve
2 Valve main body
3 Valve element
4 Washer
5 Coil spring
6 Retaining ring
OR O-ring
L Axis

## Claims

1. A flow path structure comprising:
a hollow main body; and
a retaining ring formed by processing a linear steel material into a C-shape,
wherein:
an annular fitting groove into which the retaining ring is fitted is provided inside of the main body, and
a fluid flows inside the retaining ring fitted in the fitting groove.

2. The flow path structure according to claim 1, wherein the retaining ring forms part of a spiral shape.

3. The flow path structure according to claim 1, wherein the retaining ring is formed of a linear steel material having a circular cross section bent into a C-shape.

4. The flow path structure according to any one of claims 1 to 3, wherein the retaining ring is formed by cutting a linear steel material that has been wound in a spiral shape.

5. The flow path structure according to any one of claims 1 to 3, wherein the retaining ring is formed by cutting a linear steel material while winding it into a spiral shape.

6. A check valve comprising:
a flow path structure according to any one of claims 1 to 5;
a valve element arranged in the main body; and
a coil spring that biases the valve element toward a valve seat,
wherein:
the coil spring is fixed to the main body via the retaining ring.

7. The check valve according to claim 6, wherein the main body is provided with a large-diameter cylindrical portion that is adjacent to the fitting groove and has an inner diameter larger than that of the fitting groove.

8. A manufacturing method of the check valve according to claim 7, the manufacturing method comprising:
a step of arranging a hollow cylindrical member having a tapered inner circumferential surface inside the large-diameter cylindrical portion;
a step of inserting the retaining ring from an inner circumferential large-diameter end side of the hollow cylindrical member and reducing the diameter of the retaining ring while elastically deforming it by displacing it along the tapered inner circumferential surface; and
a step of pushing out the retaining ring from an inner circumferential small diameter end side of the hollow cylindrical member and fitting it into the fitting groove.

9. The manufacturing method of the check valve according to claim 8, wherein the step of reducing the diameter includes inserting the retaining ring from the inner circumferential large-diameter end side of the hollow cylindrical member with an assembly jig having an outer diameter that is smaller than a maximum inner diameter of the tapered inner circumferential surface of the hollow cylindrical member and larger than a minimum inner diameter thereof.

10. The manufacturing method of the check valve according to claim 9, wherein the step of reducing the diameter includes driving, after inserting the retaining ring with the assembly jig, the retaining ring further toward the inner circumferential small diameter end side with a small diameter assembly jig having an outer diameter smaller than that of the assembly jig.

11. The manufacturing method of the check valve according to claim 10, wherein the assembly jig and the small diameter assembly jig are integrally configured.

12. The manufacturing method of the check valve according to any one of claims 8 to 11, wherein an outer diameter of the retaining ring in a free state is smaller than the maximum inner diameter of the hollow cylindrical member.
